# DEMANDE DE BREVET EUROPEEN

(11) **EP 0 885 805 A1**
(43) Date de publication de la demande: **23.12.1998**
(21) Numéro de dépôt: 98401399.5
(22) Date de dépôt: 10.06.1998
(51) Int. Cl.: B65B 9/04, B29C 51/16

(54) **Procede et installation de thermoformage, remplissage et fermeture de pots en matiere plastique**

(30) Priorité: 10.06.1997 FR 9707154
(71) Demandeur: S.A. CMA, 27220 Saint Andre de L'eure (FR)
(72) Inventeur: Hautemont, Jean-Claude, 91190 Gif sur Yvette (FR); Deniau, Dominique, 91620 La Ville du Bois (FR)
(74) Mandataire: Ahner, Francis

(57) **Abrégé**

L'invention concerne un procédé de réalisation de remplissage et de fermeture de pots en matière plastique therlmoformée.

Selon l'invention, il comprend les étapes consistant à découper dans une bande continue (10) de matière plastique des bandes individuelles (11) dont les dimensions correspondent aux dimensions externes du moule de formage (1), à chauffer successivement lesdites bandes individuelles, à former les bandes individuelles chauffées dans un moule de formage à la forme des pots à réaliser, à remplir lesdits pots ainsi formés, et à fermer les pots remplis en soudant sur chacun d'entre eux un couvercle de fermeture.

L'invention concerne également une installation de mise en oeuvre d'un tel procédé.

## Description

La présente invention concerne un procédé et une installation de réalisation, de remplissage et de fermeture de pots en matière plastique thermoformée.

L'invention trouve une application particulièrement avantageuse, notamment dans le domaine de l'industrie alimentaire et plus particulièrement celle des produits laitiers, pour la fabrication de yaourts par exemple.

Actuellement, on connaît déjà un procédé qui consiste à thermoformer des pots dans une bande continue de matière plastique.

Selon ce procédé déjà connu, on transporte une bande de matière plastique continue au travers des différents postes d'une installation de thermoformage, de sorte que cette bande traverse une boîte de chauffe pour être chauffée, un poste de formage où se trouve un moule et un poinçon de formage pour la formation des pots, puis les pots extraits du moule, avancent pas à pas jusqu'à un poste de remplissage puis sont transférés à un poste de soudage où l'on soude sur lesdits pots une bande continue d'opercules de fermeture.

Une particularité de ce procédé qui utilise un seul moule de formage en position fixe au poste de formage, est que les pots restent solidaires les uns des autres par des portions de ladite bande continue formant des points d'attache, jusqu'à la fin de la chaîne de fabrication, où ils sont découpés.

On connaît également selon le document DE - 18 159 83, un procédé pour fabriquer des bacs par thermoformage d'une feuille thermoplastique déformable, selon lequel avant de thermoformer la feuille thermoplastique, on détache des coupes rectangulaires de longueurs déterminées pour deux bacs à façonner, puis on entraîne ces coupes sur les bords aux différents postes de travail.

De tels procédés présentent cependant plusieurs inconvénients.

Le principal inconvénient de ces procédés, est qu'ils utilisent une grande quantité de matière plastique.

Ils génèrent des déchets de matériaux plastiques qui sont souvent souillés par le produit avec lequel on remplit lesdits pots, et qui ne peuvent pas par conséquent être recyclés.

En effet, selon les deux procédés déjà connus, le transport de la bande continue ou des coupes rectangulaires au travers de l'installation, est réalisé à l'aide de pinces qui viennent pincer les bords longitudinaux de la bande ou de la coupe rectangulaire, et qui sont déplacées sur des rails de guidage qui traversent l'ensemble des postes de l'installation.

Il est alors nécessaire de prévoir une largeur de bande ou de coupe supérieure à la largeur utile pour la formation des pots, de manière que les pinces puissent maintenir ladite bande ou ladite coupe de façon satisfaisante. Ces bords de bande ou de coupe utilisés pour le transport de la bande continue ou de la coupe individuelle, constituent des déchets de matière plastique non recyclables.

De plus, selon ces procédés, l'opération de soudage des opercules de fermeture sur les pots thermoformés, est réalisée à chaud à l'aide d'une électrode qui vient se positionner sur les opercules plaqués contre les bords des pots, et d'une contre-électrode qui s'engage par le dessous entre chaque pot. Il est alors nécessaire de prévoir entre les pots thermoformés successifs des portions de bande suffisamment larges pour permettre le passage de la contre-électrode.

Sachant que de telles installations de thermoformage fonctionnent à très forte cadence (jusqu'à 40 000 pots fabriqués par heure), les pertes de matière plastique représentent chaque année en coût de fabrication plusieurs millions de francs.

Un autre inconvénient de ces procédés est qu'ils ne sont pas facilement modulables.

Dans de tels procédés les temps improductifs sont importants, car l'ouverture et la fermeture de la presse de formage prend un temps relativement long à chaque formage de pots. On peut estimer que sur deux secondes correspondant au formage d'un groupe de pots, seul 0,7 secondes sont consacrées au formage réel des pots le reste du temps improductif est utilisé à l'ouverture à la fermeture de la presse de formage.

Le fait que les pots thermoformés soient liés les uns aux autres dans la bande continue de matière ou liés deux par deux dans une coupe rectangulaire de matière, entraîne des risques d'écrasement des pots qui s'élèvent environ à 2 ou 3% du total de pots fabriqués, ce qui engendre des pertes de produits et des temps d'arrêt conséquents de l'installation.

Selon de tels procédés et notamment du document FR 2 034 915, la mise en place des banderoles de décors dans le moule de formage avant l'arrivée d'une portion de bande de matière continue pour la formation des pots, est réalisée par enroulement de chaque banderole et introduction du cylindre enroulé à l'intérieur de chaque alvéole du moule. Lorsque le cylindre de banderole, qui est enroulé de sorte qu'il présente un diamètre inférieur au diamètre de l'alvéole du moule, est introduit dans l'alvéole correspondante du moule de formage, il se détend pour venir au contact de la paroi interne du moule. Ce contact est généralement insuffisant car il est réalisé en quelques points seulement de la paroi interne du moule. Ainsi, lorsque les pots sont thermoformés, il se peut que les banderoles adhèrent mal auxdits pots.

En outre, au cours du formage des pots, il peut se produire des pliages aux angles des banderoles de décor que l'on appelle des cols roulés, indésirables.

Enfin, l'installation de mise en oeuvre de ces procédés est relativement complexe du fait qu'elle comporte un seul moule de formage nécessairement refroidi en permanence pour pouvoir réaliser successivement les pots. En effet, à chaque formation d'une série de pots, le moule se réchauffe par conduction de la chaleur de la bande vers le moule, et le moule chaud doit être refroidi pour permettre la formation de la série suivante. Les conduits de refroidissement par eau du moule rend le poste de formage complexe et nécessite un entretien important.

Afin de pallier les inconvénients précités du procédé de l'état de la technique, l'invention propose un nouveau procédé de réalisation, de remplissage et de fermeture de pots en matière plastique thermoformée, qui est facilement modulable, et qui utilise une quantité optimisée de matière plastique avec un minimum de perte. L'invention propose également une installation de mise en oeuvre d'un tel procédé, qui présente une conception simplifiée, dont la maintenance et le nettoyage sont facilités par une implantation des différents postes de l'installation à la fois plus accessible et mieux protégée.

En particulier, le procédé selon l'invention comprend les étapes suivantes :
a) On découpe dans une bande continue de matière plastique, des bandes individuelles dont les dimensions correspondent aux dimensions externes du moule de formage, et dans lesquelles on forme le contour externe des pots à réaliser,
b) on chauffe successivement lesdites bandes individuelles,
c) on forme chaque bande individuelle chauffée dans un moule de formage à la forme des pots à réaliser,
d) on remplit lesdits pots ainsi formés, et
e) on ferme les pots remplis en soudant sur chacun d'entre eux un couvercle de fermeture.

Ainsi, selon l'invention, on découpe dans une bande de matière continue, des bandes individuelles qui seront par la suite transportées au travers des différents postes de l'installation de thermoformage. Ceci permet un gain. considérable de matière plastique utilisée, qui peut être évalué jusqu'à 10%, et permet également d'augmenter les cadences de thermoformage. Un tel procédé est alors plus facilement modulable, autorisant des changements de produits d'emballage rapide sans perte de production.

Selon une caractéristique avantageuse du procédé conforme à l'invention, on enroule et on colle sur elle-même une banderole de décoration pour former un manchon que l'on conforme à la forme interne de chaque alvéole du moule de formage, un tel manchon de décoration étant introduit dans chaque alvéole vide du moule de formage.

La réalisation de manchons collés, permet d'éviter la formation de cols roulés indésirables lors du formage des pots à l'intérieur des alvéoles contenant les manchons de décor. En outre, ces manchons qui présentent une forme correspondant à la forme interne des alvéoles, vont se plaquer correctement contre la surface interne desdites alvéoles et par la suite bien adhérer à la surface externe des pots thermoformés.

Selon une caractéristique avantageuse, les banderoles de décoration sont réalisées à partir d'une bande de décoration déroulée en continu, qui est coupée longitudinalement de manière à former des bandelettes dont la largeur est légèrement supérieure au périmètre des pots à réaliser, les bandelettes étant découpées transversalement en banderoles suivant un profil particulier en fonction de la formation du manchon de décoration que l'on veut obtenir, le pas de la découpe transversale correspondant à la hauteur des pots à réaliser.

Ainsi, la découpe transversalement optimisée des bandelettes pour la formation des banderoles, permet de diminuer les pertes de matière de décoration.

Selon d'autres caractéristiques du procédé conforme à l'invention, à l'étape a) on forme dans chaque bande individuelle les lignes sécables de séparation des pots. A l'étape e), on découpe tout d'abord dans un film déroulé en continu, une feuille dont les dimensions correspondent à celles de la surface d'une bande individuelle, et dans cette feuille on prédécoupe les couvercles de fermeture desdits pots, on soude la feuille prédécoupée sur les pots thermoformés de sorte que chaque couvercle de fermeture vient fermer par soudage un pot thermoformé.

L'invention propose également une installation de réalisation, de remplissage et de fermeture de pots en matière plastique, pour la mise en oeuvre du procédé précité.

Cette installation comprend successivement un poste de chauffage, un poste de formage, un poste de remplissage et un poste de soudage de couvercle de fermeture.

Elle est caractérisée en ce qu'elle comporte :
- en amont du poste de chauffage, un poste de découpage muni d'une presse de découpe pour le découpage d'une bande continue en matière plastique, en bandes individuelles,
- une pluralité de moule de formage comportant une pluralité d'alvéoles correspondant à un nombre déterminé de pots à réaliser,
- des moyens de positionnement d'une bande individuelle sur chaque moule de formage positionné au poste de découpage,
- des moyens d'avance pas à pas des moules formage pourvus de bandes individuelles en matière plastique au travers de ladite installation de sorte que chaque moule de formage passe successivement au poste de chauffage, au poste de formage, au poste remplissage et au poste de soudage,
- un poste d'extraction pourvu de moyens pour extraire de ladite installation les pots thermoformés, remplis et fermés.

Ainsi avantageusement, l'installation selon l'invention comporte une pluralité de moules individuels indépendants qui se déplacent avec leur bande individuelle à l'intérieur de l'installation. Lorsque les pots sont thermoformés à l'intérieur des moules individuels, lesdits moules transportent ces pots jusqu'à la sortie de l'installation. Les risques d'écrasement des pots après leur formation sont alors éliminés. De plus, il n'est plus nécessaire de prévoir une grande distance de bande entre chaque pot, pour permettre le soudage d'opercules de fermeture sur lesdits pots, puisque chaque moule de formage individuel, comme cela sera décrit plus en détails ultérieurement, constitue la contre-électrode de soudure pour le soudage des opercules de fermeture sur lesdits pots thermoformés. Une telle installation est très flexible et modulable, elle permet un changement de production d'emballage rapide sans perdre de production. Les pertes de temps occasionnées par l'ouverture et la fermeture de la presse de formage encombrante de l'installation selon l'état de la technique, sont évitées, puisque le poste de thermoformage de l'installation selon l'invention est allégé car il comporte seulement des poinçons de formage aptes à s'introduire dans chaque moule de formage individuel qui se présente au poste de formage. De plus, selon l'invention, il n'est plus nécessaire de refroidir par eau les moules de formage individuels qui se refroidissent naturellement après leur sortie du poste de formage.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en plan schématique de l'installation selon l'invention,
- la figure 2 est une représentation schématique d'un mode de réalisation d'une bande individuelle découpée selon le procédé conforme à l'invention,
- la figure 3 est une représentation schématique du poste de découpage de l'installation selon l'invention,
- les figures 4a et 4b représentent schématiquement les moyens d'avance pas à pas des moules de formage dans l'installation selon l'invention
- la figure 5 est une vue en coupe de côté d'un mode de réalisation d'un moule de formage individuel de l'installation selon l'invention, avec une bande individuelle thermoformée,
- la figure 6 représente schématiquement le système d'avancement de la chaîne du carousel de l'installation selon l'invention,
- les figures 7a et 7b représentent l'étape de formage au poste de formage de l'installation selon l'invention,
- la figure 8 représente l'opération d'extraction des caches/centreurs de l'installation selon l'invention,
- la figure 9 représente schématiquement le poste de soudage de l'installation selon l'invention,
- la figure 10 représente schématiquement le poste de mise en place de banderoles de décor de l'installation selon l'invention,
- la figure 11 représente une étape de formation de banderoles de décor selon le procédé conforme à l'invention, et
- la figure 12 représente une banderole de décor formée selon le procédé conforme à l'invention.

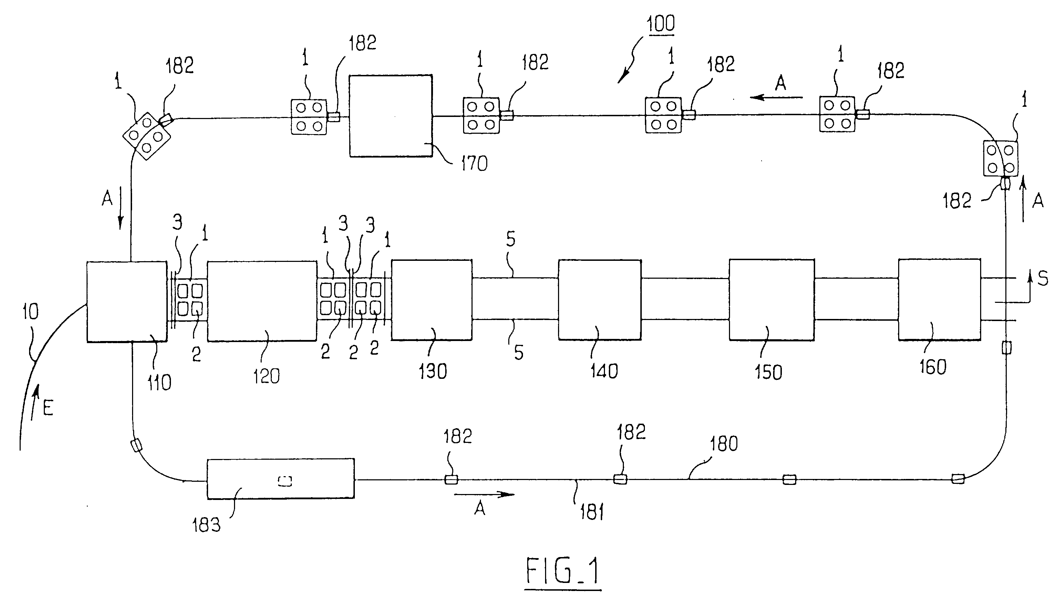

Sur la figure 1 on a représenté une installation 100 de réalisation, de remplissage et de fermeture de pots en matière plastique thermoformés.

Cette installation 100 comprend successivement un poste de chauffage 120, un poste de formage 130, un poste de remplissage 140, et un poste de soudage de couvercles de fermeture 150.

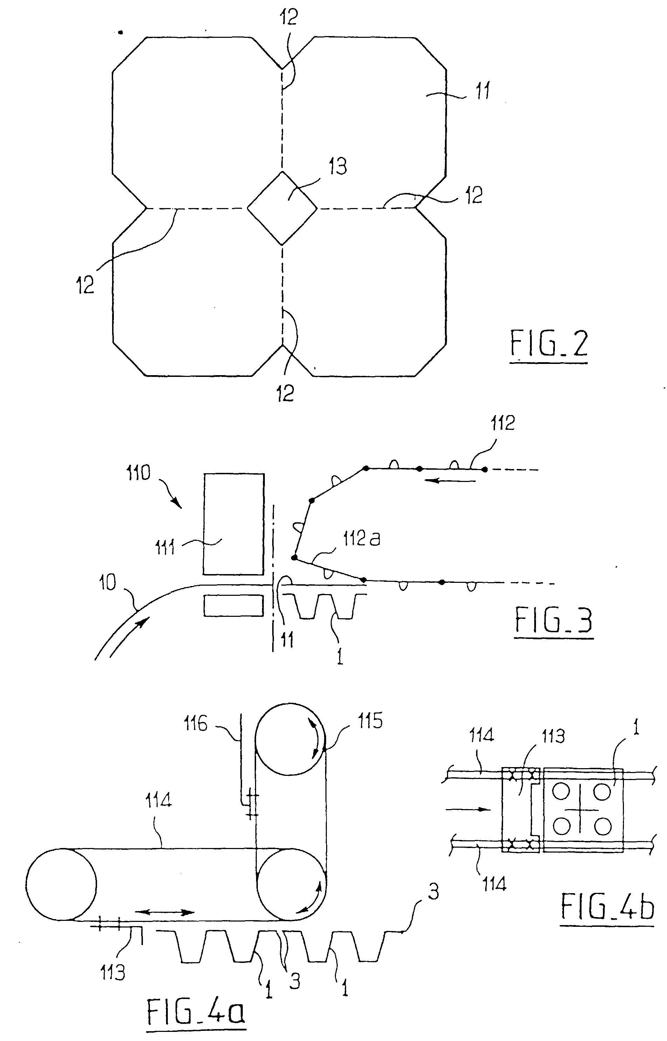

Elle comporte en amont du poste de chauffage 120, un poste de découpage 110. A ce poste de découpage 110, il est prévu une presse de découpe 111 représentée plus particulièrement sur la figure 3, pour le découpage d'une bande continue 10 en matière plastique, en bandes individuelles 11. Le cycle de découpage de la bande continue en bande individuelle dure 0,7 seconde.

La bande continue 10 de matière plastique peut être amenée dans la presse de découpe 111 par l'intermédiaire d'un vérin actionnant une pince, ce vérin étant doté d'un mouvement de pivotement alternatif autour d'un point fixe du bâti de l'installation. La pince tire alors la bande continue pour l'amener jusqu'à la presse de découpe. L'avance de la bande continue de matière vers la presse de découpe 111 s'effectue pas à pas. La bande de matière à découper est alors poussée à l'intérieur de la presse de découpe 111.

La partie supérieure de la presse de découpe 111 représentée sur la figure 3 comporte des couteaux et la partie inférieure constitue la matrice de découpe des bandes individuelles. La presse de découpe présente un mouvement alternatif vertical et a pour objet de mettre en pression et de faire pénétrer les couteaux à l'intérieur de la bande de matière à découper pour former des bandes individuelles qui en sortie de ladite presse, ont par exemple le profil tel que représenté sur la figure 2.

Comme le montre la figure 2, chaque bande individuelle en matière plastique 11 comporte un contour extérieur qui est le contour extérieur des pots à réaliser, elle comprend à l'intérieur les zones sécables 12 de séparation des pots à réaliser et en son centre un évidement 13. Bien entendu selon d'autres modes de réalisation, un tel évidement peut ne pas exister.

Cette bande individuelle 11 représentée sur la figure 2, est prévue par la réalisation d'une série de quatre pots thermoformés.

Dans d'autres modes de réalisation, on peut prévoir que cette bande individuelle 11 soit découpées pour la mise en forme de six, huit, ou douze pots.

Comme le montre la figure 3, lorsque les bandes individuelles 11 sont découpées, elles sont, en sortie de la presse de découpe 111, transférées sur des moules de formage 1.

En effet, l'installation 100 comporte une pluralité de moules de formage 1 comprenant une pluralité d'alvéoles 2, ici quatre alvéoles, correspondant à un nombre déterminé de pots à réaliser, ici des séries de quatre pots à réaliser.

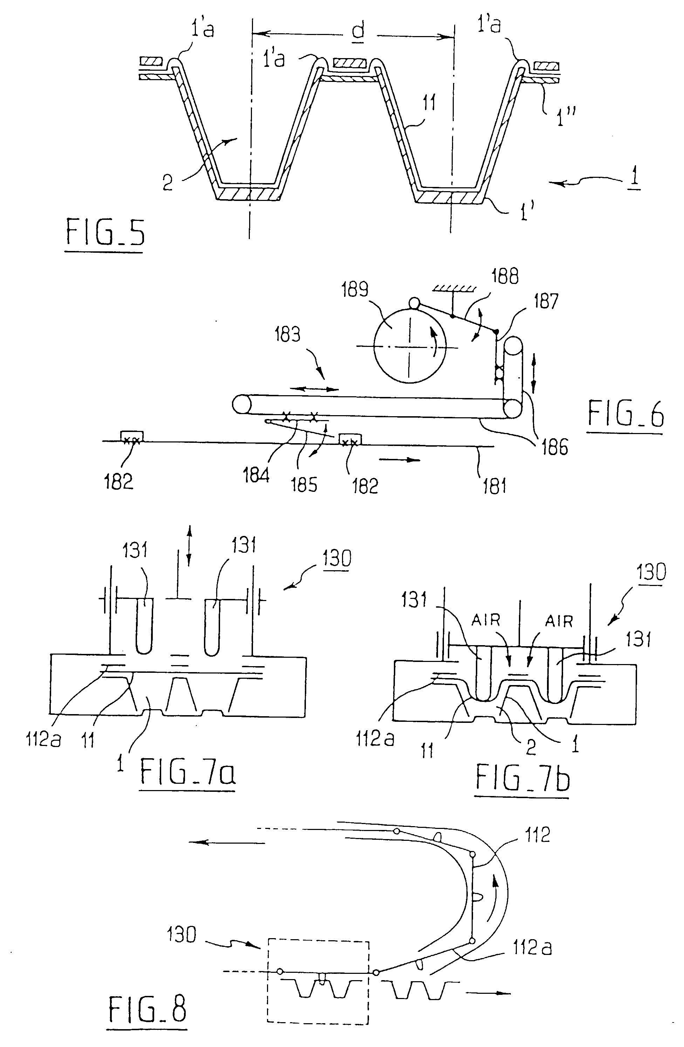

Chaque moule de formage 1 de l'installation 100, représenté plus particulièrement sur la figure 5, comprend deux parties assemblées, réalisées par exemple par moulage d'inox alimentaire, la partie inférieure 1' constituant les alvéoles 2 du moule de formage, venant s'accrocher dans les ouvertures d'une plaque supérieure 1", de sorte que les bords desdites alvéoles de la partie inférieure 1' font saillie de la face supérieure de ladite plaque supérieure 1''. Une telle réalisation du moule de formage 1, permet de maintenir entre chaque alvéole du moule, l'entre-axe théorique déterminé. Lesdits bords en saillie de la partie inférieure 1' du moule de formage 1 permettent, lors du formage d'une bande individuelle, de former également un bourrelet l'a qui facilitera le soudage des couvercles de fermeture sur les bords des pots thermoformés.

Le transfert des bandes individuelles 11 s'effectue par poussée de chaque bande individuelle au-dessus d'un moule de formage 1 en attente.

En outre, à la sortie du poste de découpage 110, il est prévu une chaîne sans fin 112 qui défile en continue, qui transporte et qui dépose des caches/centreurs 112a sur les moules de formage pourvus de bandes individuelles 11 de sorte que certaines parties de chaque bande individuelle sont cachées et ne seront pas chauffées ultérieurement. Ces caches/centreurs 112a permettent également de centrer et de maintenir les bandes individuelles 11 sur les moules de formage 1 correspondants.

L'installation 100 comporte des moyens d'avance pas à pas des moule de formage 1 de sorte que chaque moule de formage 1 muni d'une bande individuelle 11 soit transféré d'un poste à l'autre et passe successivement au poste de chauffage 120, au poste de formage 130, au poste de remplissage 140 et au poste de soudage 150 de l'installation.

En particulier, comme le montre la figure 1, les moules de formage 1 sont positionnés en file les uns derrière les autres, suspendus sur des rails parallèles 5, qui s'étendent du poste de découpage 110 jusqu'au poste d'extraction 160 de l'installation, en traversant chacun des postes de ladite installation. Les moules de formage 1 sont en contact les uns avec les autres dans la file, par l'intermédiaire de tétons de suspension et de poussée 3.

Les moyens d'avance pas à pas comportent alors un pousseur 113 représenté plus particulièrement sur les figures 4a et 4b, qui est situé au niveau du poste de découpage, et qui pousse le premier moule de formage 1 de la file de sorte que l'avancée de ce premier moule de formage 1 provoque par contact l'avancée du moule de formage 1 suivant, et ainsi de suite jusqu'au dernier moule de formage 1 de la file.

Le système d'actionnement du pousseur 113 peut être par exemple, comme cela est représenté sur les figures 4a et 4b, un système à courroies sans fin 114 qui entraînent dans un mouvement de va-et-vient le pousseur 113. Les rouleaux d'entraînement de ces courroies 114 sont entraînés en rotation, par exemple à l'aide d'une courroie 115 sans fin actionnée par une bielle 116.

Le poste de chauffage 120 de l'installation 100 comprend une boîte de chauffe à l'intérieur duquel passent les moules de formage 1 portant leur bande individuelle 11 en matière plastique. Le temps de séjour à l'intérieur du poste de chauffe de chaque moule de formage 1 est d'environ 12 secondes de sorte qu'à la sortie de ce poste de chauffage 120 les bandes individuelles 11 sont suffisamment chauffées pour être malléables et formées par la suite au poste de formage 130.

Après le poste de chauffe 120 vient le poste de formage 130 où il est prévu, comme le montre les figures 7a et 7b, autant de poinçons de formage 131 qu'il y a d'alvéoles dans un moule de formage individuel 1. L'étape de formage est réalisée sur un cycle de 2 secondes, par descente des poinçons de formage de sorte qu'ils s'engagent dans les alvéoles du moule de formage considéré, en entraînant la bande individuelle 11 correspondante en matière plastique chauffée. Comme le montre plus particulièrement la figure 7a, les poinçons sont assistés d'une injection d'air pour plaquer les parties utiles de la bande de matière plastique individuelle contre les parois internes du moule de formage froid. Au contact des parois internes du moule de formage 1, la bande individuelle 11 se fige, en prenant la forme interne des alvéoles 2 dudit moule 1.

On notera, que le cache/centreur 112a positionné sur la bande individuelle 11 portée par le moule de formage 11 permet de maintenir lors de l'opération de formage les bords de la bande individuelle 11 chauffée.

Lorsque l'opération de thermoformage est terminée, chaque moule de formage 1 comportant ses pots thermoformés, est éjecté du poste de formage et est poussé par l'intermédiaire du pousseur 113 via les autres moule de formage 1, jusqu'au poste de remplissage 140.

Dans l'intervalle entre le poste de formage 130 et le poste de remplissage 140, il est prévu, comme le montre plus particulièrement la figure 8, juste après le poste de formage 130, des moyens pour retirer les caches/centreurs 112a des moules de formage 1. Ces moyens comprennent la chaîne sans fin 112 qui transporte alors les caches/centreurs jusqu'au niveau du poste de découpage 110.

Au poste de remplissage 140, il est prévu un doseur pour introduire à l'intérieur des pots thermoformés de la matière, telle que de la matière alimentaire.

Puis vient le poste de mise en place 150 d'un couvercle de fermeture sur chacun des pots remplis, transportés par chaque moule de formage.

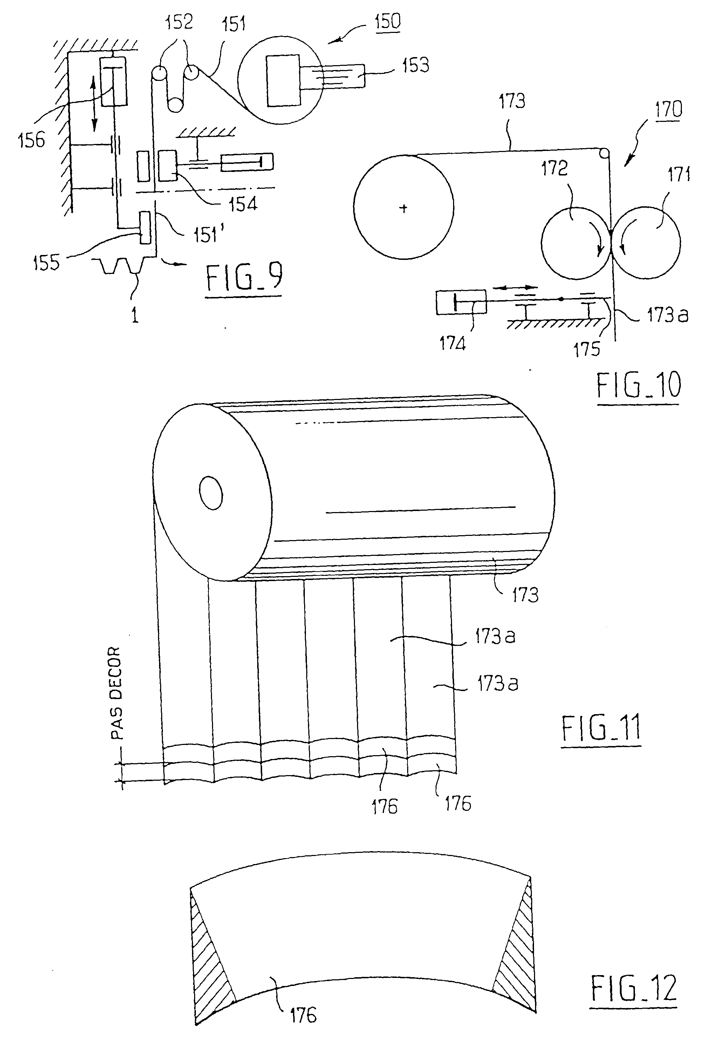

Ce poste de mise en place de couvercle de fermeture 150 est plus particulièrement représenté sur la figure 9.

Comme le montre la figure 9, au poste de soudage 150, il est prévu des moyens 154 constitués par une presse de découpe, pour découper un film d'operculage 151 déroulé en continu à l'aide d'un moto-réducteur 153 et de rouleaux de renvoi 152. Ces moyens de découpage 154 découpent alors dans ledit film d'operculage 151 positionné verticalement, des feuilles 151' dont les dimensions sont environ celles de la surface des bandes individuelles 11. Dans ces feuilles 151', il est prédécoupé au moyen de la presse de découpe 154 les couvercles de fermeture des pots thermoformés. En sortie de cette presse de découpe 154 chaque feuille prédécoupée 151' est maintenue à l'aide d'un système de maintien 155 actionné par un vérin 156, en position d'attente verticale par rapport au sens d'avancement des moules formage 1. Comme le montre la figure 9, lorsqu'un moule de formage 1 se présente au niveau d'une feuille prédécoupée 151', il la pousse horizontalement de telle sorte qu'elle vient se positionner exactement sur la surface supérieure du moule avec les couvercles de fermeture prédécoupés, centrés sur chacun des pots transportés par le moule. Dans cette position, la feuille 151' est placée en dessous d'une électrode de soudure non représentée. Cette feuille prédécoupée 151', est alors soudée aux bords des pots par serrage entre l'électrode de soudure et le moule de formage 1 qui forme contre-électrode. Ce système de soudage de couvercles est avantageux du fait qu'on utilise le moule de formage comme contre-électrode, ce qui permet de réduire d'environ 10% la matière plastique nécessaire entre deux pots dans le moule de formage.

Lorsque les pots en matière plastique sont remplis et fermés, en sortie du poste de soudage 150, ils sont extraits de l'installation par des moyens d'extraction prévus au poste d'extraction 160.

Avantageusement, l'installation 100 selon l'invention, comprend un carrousel 180 positionné autour de la succession des différents postes de ladite installation, et apte à transporter lesdits moules de formage 1 vides après extraction desdits pots, suivant un trajet de retour jusqu'au poste de découpage 110.

Plus particulièrement, ce carrousel 180 comprend une chaîne 181 qui peut être également un câble ou bien une courroie, qui suit en continu un trajet aller partant du poste de découpage 110 jusqu'au poste d'extraction 160, et un trajet retour partant du poste d'extraction 160 jusqu'au poste de découpage 110. La chaîne 181 défile selon les flèches A représentées sur la figure 1. Cette chaîne 181 est pourvue de taquets 182 espacés régulièrement, qui coopèrent avec un système d'avancement 183 placé sur le trajet aller de la chaîne 181.

La figure 6 représente plus particulièrement le système d'avancement 183 de la chaîne 181 du carrousel 180.

Ce système d'avancement comporte selon l'exemple représenté, une navette 184 qui est déplacée à l'aide d'une courroie crantée sans fin 186 enroulée sur des rouleaux entraînés en rotation par l'intermédiaire d'une bielle 187 raccordée à un levier 188 suivant le mouvement d'une came 189. Cette navette 184 se déplace sur une certaine distance suivant un mouvement de va-et-vient. Ladite navette 184 porte un clapet 185 qui, à chaque parcours aller de la navette, vient en butée contre un taquet 182 de la chaîne 181 de sorte qu'il le pousse sur la distance et fait avancer d'autant la chaîne 181.

Comme on peut le voir sur la figure 1, lorsque les pots ont été extraits de l'installation au poste d'extraction 160, les moules de formage 1 s'engagent sur le carousel 180 et sont poussés sur le trajet du retour vers le poste de découpage 110 par un taquet 182 qui vient se placer derrière chaque moule 1 de sorte que l'avancement de la chaîne 181 provoque par poussée l'avancement des moules de formage 1.

L'installation 100 comporte sur le trajet de retour des moules de formage 1 vides, un poste de mise en place de banderoles de décor 170 dans les alvéoles desdits moules.

A ce poste, comme le montre plus particulièrement la figure 10, il est prévu un rouleau porte lame 171 et un rouleau contre-lame 172 qui coopèrent ensemble pour couper longitudinalement une bande de décoration 173 (dont une face comporte une enduction pour collage à chaud) alimentée en continu, de manière à former des bandelettes 173a dont la largeur est légèrement supérieure au périmètre des pots à réaliser.

Cette opération est plus particulièrement représentée sur la figure 11, sur laquelle on distingue les différentes bandelettes 173a qui sont découpées longitudinalement dans la bande de décoration 173.

Un système de vérin 174 équipé d'une lame de coupe 175 à profil bombé, est positionné à la sortie de l'entrefer desdits rouleaux 171,172, transversalement auxdites bandelettes 173a et apte à découper transversalement lesdites bandelettes 173a en banderoles 176 selon un profil particulier, ici un profil courbe. Le pas du décor et de la découpe transversale réalisée par ledit vérin 174 correspond à la hauteur desdits pots. Les banderoles 176 issues des bandelettes 173a comportent alors un profil courbe tel que représenté sur la figure 12.

En outre, il est prévu un conformateur autour duquel est enroulée chaque banderole de décor de façon à former un manchon de décor avec deux bords d'extrémité superposés (hachurés sur la figure 12), et dont la forme correspond à la forme interne des alvéoles de chaque moule de formage, ici une forme tronconique. Il est prévu également des moyens pour chauffer lesdits bords superposés de chaque manchon de décor, afin de les coller et les manchons de décor collés sont alors engagés dans des godets de stockage non représentés en attente de l'arrivée d'un moule de formage. Lorsqu'un moule de formage arrive en dessous des godets de stockage, les manchons de décor sont poussés à l'intérieur des alvéoles du moule. Le moule de formage comprenant alors les banderoles de décor est alors amené par le carrousel jusqu'au poste de découpage 110 où il prend en charge une bande individuelle 11 de matière plastique.

Ainsi, lors de la formation des pots à l'intérieur des moules de formage, les manchons de décor collés, plaqués contre les parois internes des alvéoles du moule de formage, viennent se coller sur les surfaces externes des pots. Chaque manchon de décor étant collé, on n'a pas de phénomène de pliage des bords superposés dudit manchon, et donc pas phénomène de col roulé. Les pots en sortie d'installation portent autour de leur surface externe cylindrique, une banderole de décoration.

## Revendications

1. Procédé de réalisation, de remplissage et de fermeture de pots en matière plastique thermoformée, caractérisé en ce qu'il comprend les étapes suivantes :
a) on découpe dans une bande continue (10) de matière plastique des bandes individuelles (11) dont les dimensions correspondent aux dimensions externes du moule de formage (1), et dans lesquelles on forme le contour externe des pots à réaliser,
b) on chauffe successivement lesdites bandes individuelles (11),
c) on forme chaque bande individuelle chauffée (11) dans un moule de formage (1) à la forme des pots à réaliser,
d) on remplit lesdits pots ainsi formés,
e) on ferme les pots remplis en soudant sur chacun d'entre eux un couvercle de fermeture.

2. Procédé selon la revendication 1, caractérisé en ce qu'on enroule et on colle sur elle-même une banderole de décoration (176) pour former un manchon que l'on conforme à la forme interne de chaque alvéole du moule de formage, un tel manchon de décoration étant introduit dans chaque alvéole vide du moule de formage.

3. Procédé selon le revendication 2, caractérisé en ce que les banderoles de décoration (176) sont réalisées à partir d'une bande de décoration (173) déroulée en continu, qui est coupée longitudinalement de manière à former des bandelettes (173a) dont la largeur est légèrement supérieure au périmètre des pots à réaliser, les bandelettes (173a) étant découpées transversalement en banderoles (176) suivant un profil particulier en fonction de la forme du manchon de décoration que l'on veut obtenir, le pas de la découpe transversale correspondant à la hauteur des pots à réaliser.

4. Procédé selon l'une des revendications 1 à 3, caractérisé en ce qu'à l'étape a) on forme dans chaque bande individuelle (11) les lignes sécables (12) de séparation des pots.

5. Procédé selon l'une des revendications 1 à 4, caractérisé en ce qu'à l'étape e) on découpe tout d'abord dans un film (151) déroulé en continu, une feuille (151') dont les dimensions correspondent à celles de la surface d'une bande individuelle, et dans cette feuille (151') on prédécoupe les couvercles de fermeture desdits pots, on soude la feuille prédécoupée (151') sur les pots thermoformés de sorte que chaque couvercle de fermeture vient fermer par soudage un pot thermoformé.

6. Installation de réalisation, de remplissage et de fermeture de pots en matière plastique, pour la mise en oeuvre du procédé selon l'une des revendications 1 à 5, comprenant successivement un poste de chauffage (120) un poste de formage (130), un poste de remplissage (140) et un poste de soudage de couvercles de fermeture (150), caractérisée en ce qu'elle comporte :
- en amont du poste de chauffage (120) un poste de découpage (110) muni d'une presse de découpe (111) pour le découpage d'une bande continue (10) en matière plastique en bandes individuelles (11),
- une pluralité de moules de formage (1) comportant une pluralité d'alvéoles (2) correspondante à un nombre déterminé de pots à réaliser,
- des moyens de positionnement d'une bande individuelle sur chaque moule de formage positionné au poste de découpage,
- des moyens (113,114,115,116) d'avance pas à pas des moules de formage pourvus de bandes individuelles en matière plastique au travers de ladite installation de sorte que chaque moule de formage (1) passe successivement au poste de chauffage (120), au poste de formage (130), au poste de remplissage (140) et au poste de soudage (150),
- un poste d'extraction (160) pourvu de moyens pour extraire de ladite installation les pots thermoformés, remplis et fermés.

7. Installation selon la revendication 6, caractérisée en ce qu'elle comporte un carrousel (180) positionné autour de la succession des différents postes de ladite installation et apte à transporter lesdits moules de formage (1) vides après extraction desdits pots, suivant un trajet de retour jusqu'au poste de découpage (110).

8. Installation selon la revendication 7, caractérisée en ce que le carrousel (180) comprend une chaîne (181), ou un câble ou encore une courroie, suivant en continu un trajet aller partant du poste de découpage (110) jusqu'au poste d'extraction (160), et un trajet retour partant du poste d'extraction (160) jusqu'au poste de découpage (110), ladite chaîne (181) étant pourvue de taquets (182) espacés régulièrement, qui coopèrent avec un système d'avancement (183), placé sur le trajet aller de ladite chaîne (181).

9. Installation selon la revendication 8, caractérisée en ce que le système d'avancement (183) comporte une navette (184) déplacée sur une certaine distance suivant un mouvement de va-et-vient, ladite navette (184) portant un clapet (185) qui, à chaque parcours aller de la navette, vient en butée contre un taquet (182) de la chaîne (181) de sorte qu'il le pousse sur ladite distance et fait avancé d'autant la chaîne (181).

10. Installation selon l'une des revendications 7 à 9, caractérisée en ce qu'elle comporte sur le trajet de retour des moules de formage (1) vides, un poste de mise en place de banderoles de décor (170) dans les alvéoles (2) desdits moules (1).

11. Installation selon la revendication 10, caractérisée en ce qu'au poste de mise place de banderoles de décor, il est prévu :
- un rouleau porte lame (171) et un rouleau contre-lame (172) qui coopèrent ensemble pour couper longitudinalement une bande de décoration (173) alimentée en continu de manière à former des bandelettes (173a) dont la largeur est légèrement supérieure au périmètre des pots à réaliser,
- un système à vérin (174) équipé d'une lame de coupe (175), positionné à la sortie de l'entrefer desdits rouleaux, transversalement auxdites bandelettes (173a), et apte à découper transversalement lesdites bandelettes (173a) en banderoles (176) suivant un profil particulier, le pas de la découpe transversale réalisée par ledit vérin (174) correspondant à la hauteur desdits pots,
- un conformateur autour duquel est enroulée chaque banderole de décor de façon à former un manchon de décor avec deux bords d'extrémités superposés, et dont la forme correspond à la forme interne des alvéoles de chaque moule de formage,
- des moyens pour chauffer lesdits bords superposés de chaque manchon de décor afin de les coller,
- des godets de stockage desdits manchons de décor collés, en attente de l'arrivée d'un moule de formage.

12. Installation selon l'une des revendications 6 à 11, caractérisée en ce qu'au poste de soudage (150), il est prévu :
- des moyens (154) pour découper dans un film (151) déroulé en continu, des feuilles (151') dont les dimensions sont environ celles de la surface des bandes individuelles de matière plastique (11),
- des moyens (154) pour prédécouper dans ces feuilles (151') les couvercles de fermeture des pots thermoformés,
- des moyens (155,156) pour positionner chaque feuille prédécoupée (151') entre la surface supérieure d'un moule de formage contenant les pots thermoformés, et une électrode de soudure, de sorte que les couvercles de fermeture sont centrés sur lesdits pots, chaque feuille prédécoupée (151') étant alors soudée aux bords des pots par pressage et chauffage entre l'électrode de soudure et le moule de formage qui forme contre-électrode.

13. Installation selon l'une des revendications 6 à 12, caractérisée en ce qu'à la sortie du poste de découpage, il est prévu une mise en place d'un cache/centreur (112a) sur chaque moule de formage recouvert d'une bande individuelle (11) en matière plastique, qui maintient ladite bande individuelle (11) centrée sur ledit moule de formage (1) et qui cache une partie de cette bande individuelle (11) non chauffée ultérieurement.

14. Installation selon la revendication 13, caractérisé en ce qu'il est prévu juste après le poste de formage (130) des moyens (112) pour retirer les caches/centreurs (112a) desdits moules.

15. Installation selon l'une des revendications 6 à 14, caractérisée en les moules de formage (1) positionnés en file les uns derrière les autres, suspendus sur des rails (5) parallèles, sont transférés d'un poste à l'autre par l'intermédiaire d'un pousseur (113) situé au niveau du poste de découpage qui pousse le premier moule de formage (1) de la file de sorte que l'avancée de ce premier moule de formage (1) provoque par contact l'avancée du moule de formage (1) suivant, et ainsi de suite jusqu'au dernier moule de formage (1) de la file.

16. Installation selon l'une des revendications 6 à 15, caractérisée en ce qu'au poste de formage (130) il est prévu des poinçons de formage (131) qui s'engagent dans les alvéoles de chaque moule de formage (1), en entraînant la bande individuelle (11) en matière plastique chauffée, ces poinçons de formage (131) étant assistés d'une injection d'air pour former les pots à l'intérieur desdites alvéoles (2) du moule de formage (1).
